# EUROPÄISCHE PATENTANMELDUNG

(11) **EP 2 107 064 A1**
(43) Veröffentlichungstag der Anmeldung: **07.10.2009**
(21) Anmeldenummer: 08153960.3
(22) Anmeldetag: 02.04.2008
(51) Int. Cl.: C07F 9/22

(54) **Verfahren zur Herstellung von Triamiden aus Ammoniak und Amido-Dichloriden**

(71) Anmelder: BASF SE, 67056 Ludwigshafen (DE)
(72) Erfinder: Bock, Michael, 67152 Ruppertsberg (DE); Huttenloch, Oliver, 75228 Ispringen (DE); Deck, Patrick, 68165 Mannheim (DE); Bey, Oliver, 67150 Niederkirchen (DE); Schelling, Heiner, 67281 Kirchheim (DE); Siegert, Markus, 69126 Heidelberg (DE)

(57) **Zusammenfassung**

Die Erfindung betrifft ein Verfahren zur Herstellung von Triamiden aus Ammoniak und Amido-Dichloriden. Die Erfindung betrifft weiterhin die Verwendung von erfindungsgemäß hergestelltem N-Alkylthiophosphorsäuretriamid als Ureaseinhibitor sowie die Verwendung von erfindungsgemäß hergestelltem N-Alkylthiophosphorsäuretriamid als Zusatz in harnstoffhaltigen Düngemitteln.

## Beschreibung

Die Erfindung betrifft ein Verfahren zur Herstellung von Triamiden aus Ammoniak und Amido-Dichloriden. Die Erfindung betrifft weiterhin die Verwendung von erfindungsgemäß hergestelltem N-Alkylthiophosphorsäuretriamid als Ureaseinhibitor sowie die Verwendung von erfindungsgemäß hergestelltem N-Alkylthiophosphorsäuretriamid als Zusatz in harnstoffhaltigen Düngemitteln.

Bevorzugte Ausführungsformen sind der Beschreibung und den Ansprüchen sowie den Beispielen zu entnehmen.
Kombinationen von bevorzugten Ausführungsformen verlassen nicht den Rahmen der Erfindung.

Thiophosphorsäuretriamide, speziell N-n-Butylthiophosphorsäuretriamid (NBPT), sind wirksame Urease-Inhibitoren, die in harnstoffbasierten Düngemittelzusammensetzungen Anwendung finden. Durch solche Urease-Hemmer kann die Effizienz der Harnstoffdüngung verbessert werden, da Verluste durch den durch Urease katalysierten Abbau von Harnstoff im Boden verringert werden (Trenkel, M.E., "Controlled-Release and Stabilized Fertilizers in Agriculture", IFA 1997, ISBN: 2-9506299-0-3; S. 30f).

In US 5,770,771 wird ein Verfahren zur Herstellung von Hydrocarbylthiophosphortriamiden beschrieben. In diesem Verfahren werden Ammonium und N-Hydrocarbylamoniothiophosphoryl-Dichlorid in einer Reaktionskammer in einem Verhältnis von 16:1 gemischt, wobei eine Reaktionsmischung entsteht, die Hydrocarbylthiophosphortriamid enthält und in der das als Nebenprodukt entstehende Ammoniumchlorid in dem in großen Überschuss zugegebenen Ammonium in Lösung bleibt. Die Verweildauer des Reaktionsgemisches im Reaktor beträgt 1 bis 10 Minuten. Die Abtrennung des Wertproduktes erfolgt mittels Destillation.

In WO 2007/054392 wird ein Verfahren beschrieben zur Abtrennung von Säuren aus Reaktionsgemischen welches zur Herstellung von Alkylthiophosphorsäuretriamiden aus Ammoniak und Alkylthiophosphoryldichlorid, einem Amido-Dichlorid, eingesetzt wird. Gasförmiges Ammoniak wird durch eine Amido-Dichlorid-Lösung geleitet und zur Reaktion gebracht. Die Verweildauer des Reaktionsgemisches im Reaktor beträgt 60 Minuten. Das Wertprodukt wird mittels Phasentrennung isoliert, durch Senkung der Temperatur in der Phase ausgefällt und über einen Filtrationsschritt gereinigt.

In WO 98/31691 wird ein Verfahren beschrieben zur Herstellung von Hydrocarbylthiophosphortriamiden aus Ammoniak und Hydrocarbylaminothiophsosphoryldichlorid, einem Amido-Dichlorid. Dabei wird Ammoniak in einen, das Amido-Dichlorid enthaltenden Reaktor gegeben und zur Reaktion gebracht, wobei die Verweildauer des Reaktionsgemisches im Reaktor 90 Minuten beträgt. Das Wertprodukt wird in einem Dünnschichtverdampfer gereinigt.

Es wurde gefunden, dass bei längerer Reaktionsdauer dimere, oligomere und polymere Reaktionsprodukte aus dem Produkt Triamid und dem Edukt Amido-Dichlorid entstehen, die die mittlere Molmasse des Reaktionsgemisches erhöhen und die Qualität des Wertproduktes beeinträchtigen.

Ein erhöhter Anteil der oligomeren Nebenprodukte erschwert die Handhabung im Verfahren und erhöht die Herstellungskosten. Die Verunreinigungen lassen sich destillativ nur schwer vom Wertprodukt trennen und eine Umkristallisation ist mit erheblichem apparativem und energetischem Aufwand verbunden.

Aufgabe der vorliegenden Erfindung war es daher, ein Verfahren zur Verfügung zu stellen, welches die Entstehung oligomerer und polymerer Reaktionsprodukte bei der Herstellung von Triamiden aus Ammoniak und Amido-Dichlorid reduziert.

Diese Aufgabe wurde gelöst durch ein Verfahren zur Herstellung von Triamiden aus Ammoniak und Amido-Dichloriden, wobei die Edukte rückvermischungsfrei miteinander gemischt und zur Reaktion gebracht werden.

Bevorzugt wird eine Ausführungsform, bei der die Konzentration des Amido-Dichlorids im Mischorgan jederzeit unter 0,2 (mol/mol) % des Reaktionsgemisches bezogen auf das Volumen des Reaktionsgemisches liegt und die Mischzeit der Edukte unterhalb einer Sekunde liegt.

In einer Ausführungsform des erfindungsgemäßen Verfahrens erfolgt die Mischung der Edukte mittels Düse, Rotor-Stator-Mischer, Reaktionsmischpumpe oder Strahlmischer mit Düse.

In einer weiteren Ausführungsform des erfindungsgemäßen Verfahrens wird die Mischung in einen Rohrreaktor überführt.

In einer weiteren Ausführungsform des erfindungsgemäßen Verfahrens ist der Rohrreaktor ein Wärmetauscher.

In einer weiteren Ausführungsform des erfindungsgemäßen Verfahrens werden die Edukte vor der Vermischung so weit gekühlt, dass keine nennenswerte Reaktion im Mischorgan auftritt.

In einer weiteren Ausführungsform des erfindungsgemäßen Verfahrens wird die Reaktionswärme durch verdampfenden Ammoniak abgeführt.

In einer weiteren Ausführungsform wird der Reaktionsaustrag des Rohrreaktors in eine Kolonne überführt und das Triamid am Sumpf der Kolonne abgezogen.

In einer weiteren Ausführungsform ist das Triamid ein N-Alkylthiophosphorsäuretriamid.

Die Herstellung von Triamiden ist dem Fachmann an sich bekannt oder ist nach dem Fachmann an sich bekannten Methoden möglich. Auch die Herstellung des für die Herstellung von Triamiden benötigten Amido-Dichlorids ist dem Fachmann an sich bekannt oder ist nach dem Fachmann an sich bekannten Methoden möglich. Das für die Herstellung des erfindungsgemäßen Triamids benötigte Amido-Dichlorid, das im erfindungsgemäßen Verfahren als Einsatzstoff verwendet wird kann beispielsweise hergestellt werden wie beschrieben in WO2007/054392 aus der Reaktion von Trichloriden mit mindestens einem primären oder sekundären Amin in einem Lösungsmittel.

Ein geeignetes Lösungsmittel ist beispielsweise Essigsäureethylester. Es eigenen sich aber auch alle anderen bekannten, vorzugsweise polaren Lösungsmittel wie Ester und Ketone oder Tetrahydrofuran (THF).

Das Reaktionsgemisch dieser Reaktion enthält Amido-Dichloride und kann unmittelbar im erfindungsgemäßen Verfahren eingesetzt werden zur Reaktion mit Ammoniak zu Triamid. Alternativ kann das Amido-Dichlorid aus dem Reaktionsgemisch isoliert werden und gereinigt zur Reaktion mit Ammoniak verwendet werden.
Die Mischung der Edukte erfolgt erfindungsgemäß rückvermischungsfrei. Im erfindungsgemäßen Verfahren bedeutet "rückvermischungsfreies Mischen", dass die Edukte so schnell miteinander vermischt werden, dass während des Mischvorgangs keine nennenswerte oder keine Reaktion der Edukte erfolgt. Im Allgemeinen kommen weniger als 5 (mol/mol) % des Amido-Dichlorids zur Reaktion. Es können auch mehr als 20 (mol/mol) % des Amido-Dichlorids abreagieren. Jedoch bevorzugt nicht mehr als 10 (mol/mol) %, insbesondere bevorzugt nicht mehr als 5 (mol/mol) %. Ganz besonders bevorzugt kommen nicht mehr als 2 (mol/mol) % des Amido-Dichlorids zur Reaktion.

Die Konzentration des Amido-Dichlorids im Mischorgan liegt während des Mischvorgangs während des bestimmungsgemäßen Betriebes üblicherweise jederzeit unter 0,5 (mol/mol) % des Reaktionsgemisches, bezogen auf das Volumen des Reaktionsgemisches, bevorzugt unter 0,3 (mol/mol) %, bezogen auf das Volumen des Reaktionsgemisches. In einer besonders bevorzugten Ausführungsform liegt die Konzentration des Amido-Dichlorids im Mischorgan während des Mischvorgangs jederzeit unter 0,2 (mol/mol) %, bezogen auf das Volumen des Reaktionsgemisches.
Bestimmungsgemäßer Betrieb meint hier den kontinuierlichen Betrieb ausschließlich des Anfahrens und Herunterfahrens des Betriebes.

Die Mischzeit der Edukte ist bevorzugt sehr kurz und liegt im Sekundenbereich. Im Allgemeinen liegt die Mischzeit unter fünf Sekunden, bevorzugt unter zwei Sekunden. In einer besonders bevorzugten Ausführungsform liegt die Mischzeit der Edukte im Mischorgan unter einer Sekunde.

Unter Mischzeit wird im vorliegenden Verfahren die Zeitspanne vom Einbringen der Edukte in das Mischorgan bis zum Abschluss des Mischvorgangs verstanden. Die Mischzeit wird hier definiert nach der Schrift VTB Verfahrenstechnische Berechungsmethoden, Teil 4, Stoffvereinigung in fluiden Phasen, Seite 84, Abschnitt 3. Üblich ist eine technische Mischgüte von 95%.

Die Mischung des Amido-Dichlorids mit flüssigem Ammoniak erfolgt üblicherweise in einem Mischorgan. Bevorzugt erfolgt die Mischung mit hoher Scherung vor dem Reaktionsreaktor. Die Edukte können, je nach verwendetem Mischorgan bevorzugt flüssig, aber auch gasförmig eingebracht werden. Im erfindungsgemäßen Verfahren bedeutet Mischorgan jeder Behälter oder jede Vorrichtung, in der sich zwei oder mehr Substanzen miteinander vermischen durch im Mischorgan befindliche Einbauten oder durch den Impuls, den die Edukte beim Zugeben zum Beispiel durch eine Düse bekommen. In Abhängigkeit vom Maßstab des Reaktions-Ansatzes können verschiedene Mischorgane zum Einsatz gebracht werden. Bei kleineren Labormaßstäben sind dem Fachmann an sich bekannte Mischorgane wie zum Beispiel Propellerrührer, Scheibenrührer, Kreuzbalkenrührer oder Schrägblattrührer mit einer hohen Drehzahl einsetzbar. In einer bevorzugten Ausführungsform werden Schrägblattrührer mit einer Drehzahl von 500 bis 1000 U/min, bevorzugt 600 bis 900 U/min, insbesondere bevorzugt 750 bis 850 U/min verwendet. Die Drehzahl eines Schrägblattrührers von beispielsweise 800 U/min ist ausreichend, um erfindungsgemäße kurze Mischzeiten zu erzielen. Bei großen Maßstäben ist in einer bevorzugten Ausführungsform das Mischorgan eine Düse, ein Rotor-Stator-Mischer, eine Reaktionsmischpumpe oder ein Strahlmischer mit Düse. Bevorzugt ist das Mischorgan eine Düse oder ein Strahlmischer mit Düse. In einer besonders bevorzugten Ausführungsform ist das Mischorgan eine Düse. Bevorzugte, aber nicht einschränkende, Ausführungsformen sind in VTB Verfahrenstechnische Berechungsmethoden, Teil 4, Stoffvereinigung in fluiden Phasen, Abschnitt 3.5 und 3.6 beschrieben.

Zur Kühlung des Reaktionsgemisches kann Ammoniak im Überschuss eingesetzt werden, so dass nach der Vermischung ein Teil des Ammoniaks verdampft (Siedekühlung).

Amido-Dichlorid und Ammoniak werden normalerweise in einem Molverhältnis von 2 bis 25 mol Ammoniak pro mol Amido-Dichlorid in das Mischorgan gegeben. Bevorzugt werden mehr als 2 mol Ammoniak pro mol Amido-Dichlorid in das Mischorgan gegeben. Weiter bevorzugt werden 16 oder weniger als 16 mol jedoch mehr als 2 mol Ammoniak pro mol Amido-Dichlorid in das Mischorgan gegeben. Besonders bevorzugt werden von 2 bis 15, ganz besonders bevorzugt von 3 bis 10 mol Ammoniak pro mol Amido-Dichlorid in das Mischorgan gegeben. Insbesondere bevorzugt ist ein Molverhältnis von 4 bis 6 mol Ammoniak pro mol Amido-Dichlorid.

Die Edukte werden in einer bevorzugten Ausführungsform vor dem Beginn der Vermischung soweit gekühlt, dass vor Ende der Mischzeit keine nennenswerte Reaktion erfolgt. Dazu werden die Edukte auf unter 10°C, bevorzugt unter 5°C, besonders bevorzugt unter 1°C gekühlt. In einer insbesondere bevorzugten Ausführungsform werden die Edukte auf unter 0°C gekühlt.

Nach rückvermischungsfreier Mischung im Mischorgan erfolgt die Reaktion der Edukte im Allgemeinen in einem Reaktor. In einer bevorzugten Ausführungsform ist der Reaktor ein Rohrreaktor oder ein Schlaufenreaktor. In einer besonders bevorzugten Ausführungsform ist der Reaktor ein Rohrreaktor.
Da die Reaktion von Amido-Dichloriden und Ammoniak stark exotherm ist, wird besonders bevorzugt ein Rohrreaktor, welcher ein Wärmetauscher ist, verwendet.

Die Temperatur der Reaktion im Rohrreaktor wird auf für diese Reaktion üblichen Temperaturen gehalten. Sie liegt vorzugsweise von -30°C bis 50°C, bevorzugt von -10°C bis 10°C, besonders bevorzugt -5°C bis 8°C.

Der Reaktionsaustrag des Rohrreaktors wird im Allgemeinen in eine Vorrichtung überführt, in der das Wertprodukt vom Ammoniak abgetrennt wird. Bevorzugt handelt es sich bei der Vorrichtung um eine Kolonne an deren Sumpf das Wertprodukt abgezogen wird.

Alle Verfahrensschritte können drucklos oder auch unter Druck stattfinden. Bei Durchführung der Verfahrensschritte unter Druck liegt der Überdruck bevorzugt bei kleiner 50 bar, bevorzugt kleiner 10bar.

Die Durchführung der Reaktion kann diskontinuierlich oder kontinuierlich durchgeführt werden.

Das aus dem Prozess abgetrennte Ammoniak kann nach dem Fachmann bekannter Art und Weise wieder in das Verfahren zurückgeführt werden.

In einer bevorzugten Ausführungsform werden mit dem oben beschriebenen Verfahren N-Alkylthiophosphorsäuretriamide hergestellt. In einem besonders bevorzugten verfahren wird N-n-Butylthiophosphorsäuretriamid (NBPT) und N-Propythiolphosphorsäuretriamid oder eine Mischung davon hergestellt.

Thiophosphorsäuretriamide, speziell N-n-Butylthiophosphorsäuretriamid (NBPT), sind wirksame Urease-Inhibitoren, die in harnstoffbasierten Düngemittelzusammensetzungen Anwendung finden. Durch solche Urease-Hemmer kann die Effizienz der Harnstoffdüngung verbessert werden, da Verluste durch den Urease-katalysierten Abbau von Harnstoff im Boden verringert werden. (Trenkel, M.E., "Controlled-Release and Stabilized Fertilizers in Agriculture", IFA 1997, ISBN: 2-9506299-0-3).

Die erfindungsgemäß hergestellten Thiophosphorsäuretriamide werden beispielsweise als Zusatz zu harnstoffhaltigen mineralischen und/oder organisch-mineralischen Düngemitteln verwendet.

Thiophosphorsäuretriamide werden bekanntermaßen relativ leicht zu den entsprechenden Phosphorsäuretriamiden hydrolysiert. In Anwesenheit von Feuchtigkeit liegen Thiophosphorsäuretriamide und ihre korrespondierenden Phosphorsäuretriamide in der Regel im Gemisch miteinander vor. Der Begriff "Thiophosphorsäuretriamid" bezeichnet daher im Rahmen dieser Erfindung sowohl die reinen Thiophosphorsäuretriamide als auch deren Gemische mit den entsprechenden Phosphorsäuretriamiden.

Die erfindungsgemäße Umsetzung von Thiophosphorsäuretrichlorid mit mindestens einem Amin und Ammoniak in einem inerten Lösungsmittel unter Zuhilfenahme mindestens einer Base, die mit Chlorwasserstoff ein Hydrochloridsalz bildet, zur Herstellung von Thiophosphorsäuretriamiden erfolgt dabei vorzugsweise in folgenden molaren Verhältnissen:

In einer vorteilhaften Ausführungsform wird in etwa pro mol Thiophosphorylchlorid 1 mol Amin eingesetzt. Das Amin wird vorzugsweise in einem Molverhältnis von 0,9 bis 1,1 mol pro mol Thiophosphorylchlorid, besonders bevorzugt von 0,95 bis 1,05 mol Amin pro mol Thiophosphorsäuretrichlorid, verwendet.

Die eingesetzte Hilfsbase lässt sich leicht zurückgewinnen, Vorteilhafterweise durch Neutralisation mit einer stärkeren Base. Das Basensalz der stärkeren Base kann extraktiv oder über Phasentrennung mit Ammoniak (US 5,770,771) zurück gewonnen werden.

Der Reaktionsaustrag kann destillativ vom Lösungsmittel, Hilfsbase und eventuellen Resten an Ammoniak befreit und anschließend getrocknet werden, beispielsweise im Vakuum bei Temperaturen kleiner als 95°C, bevorzugt kleiner als 75°C, besonders bevorzugt kleiner als 65°C. Zur weiteren Trocknung des Produkts ist es auch möglich, einen Dünnschichtverdampfer einzusetzen, der im Vakuum bei vorzugsweise etwa 90°C betrieben wird.

Die Erfindung wird in den nachfolgenden Ausführungsbeispielen näher erläutert, ohne jedoch hierdurch eine entsprechende Eingrenzung vorzunehmen.

### Beispiele

Die im Batch-Kessel durchgeführten Versuche wurden mit verschiedenen Mischungszeiten bei 10 und 20 mol NH3 / mol PSCI3 durchgeführt. Die erzielten Ausbeuten in den erfindungsgemäßen Beispielen 1 und 2 liegen über dem aus dem Stand der Technik bekannten, beispielsweise denen der Schrift US 5,770,771 von 92,4%.
Die Mischzeit der Versuche wurde über eine dem Fachmann bekannte Methode (Mischzeitcharakteristik, Stieß, Mechanische Verfahrenstechnik, Band 1, S. 232 ff; Mischen und Rühren, Grundlagen und moderne Verfahren für die Praxis, Baden-Baden, 1998, S. 43 - 49) und Computational Fluid Dynamics (CFD) Methoden berechnet.

### Beispiel 1

| Einsatzstoffe: | | | |
|---|---|---|---|
| 56,25 g | Essigsäureethylester | | |
| 25,41 g | PSCl₃ | 0,15 | Mol |

| Reaktion: | | | |
|---|---|---|---|
| 18,75 g | Essigsäureethylester | | |
| 23,64 g | Tripropylamin (TPA) | 0,165 | Mol |
| 7,77 g | n-Butylamin | 0,106 | Mol |
| 2,7 g | n-Propylamin | 0,046 | Mol |
| 25,5 g | NH₃ | 1,5 | Mol |
| 20 g | Essigsäureethylester | | |

### Dichlorid Synthese:

56,25 g Essigsäureethylester wurden mit 25,41 g Thiophosphorylchlorid vorgelegt. Die Dichloridsuspension wurde dann unter Zugabe von 23,64 g Tripropylamin, 7,77 g n-Butylamin und 2,7 g n-Propylamin hergestellt.

### Thiophosphorsäuretriamidsynthese:

In eine auf -20 Grad gekühlte Druckapparatur wurde 25,5 g flüssiges Ammoniak unter 4baren Druck vorgelegt. In diese Vorlage wurden mittels einer Pumpe 5 g Essigsäureethylester (EE) eingebracht. Unter Rühren (Mischorgan: Schrägblattrührer, n=800 min-1) wurden 132,6 g Dichloridsuspension mittels einer Taumelkolbenpumpe zugegeben, wobei durch Kühlung die Temperatur im Reaktionsgefäß nicht über 0°C anstieg. Nach Überführung der Dichloridsuspension in das Reaktionsgefäß wurden weitere 15 g EE in das Reaktionsgefäß gepumpt.

Die Mischzeit der Edukte in diesem Ansatz mit diesem Mischorgan betrug 3 s.

Mittels HPLC wurde die Ausbeute der Reaktion bestimmt auf NBPT 68,3%, NPPT 25,4%, zusammen 93,7% Wertstoff.

### Beispiel 2

| Einsatzstoffe: | | | |
|---|---|---|---|
| 56,25 g | Essigsäureethylester | | |
| 25,41 g | PSCl₃ | 0,15 | Mol |

| Reaktion: | | | |
|---|---|---|---|
| 18,75 g | Essigsäureethylester | | |
| 23,64 g | Tripropylamin (TPA) | 0,165 | Mol |
| 7,77 g | n-Butylamin | 0,106 | Mol |
| 2,7 g | n-Propylamin | 0,046 | Mol |
| 51,1 g | NH₃ | 3,0 | Mol |
| 20 g | Essigsäureethylester | | |

### Dichlorid Synthese:

56,25 g Essigsäureethylester wurden mit 25,41 g Thiophosphorylchlorid vorgegelegt. Die Dichloridsuspension wurde dann unter Zugabe von 23,64 g Tripropylamin, 7,77 g n-Butylamin und 2,7 g n-Propylamin hergestellt.

### Thiophosphorsäuretriamidsynthese:

Eine Druckapparatur wurde auf -20°C gekühlt. 51,1 g Ammoniak wurde über eine Waage in diese Druckapparatur vorgelegt, der Druck betrug 4 bar. Eine angeschlossene Pumpe wurde mit 5 g EE angefahren. Unter Rühren (Mischorgan: Schrägblattrührer, n=800 min-1) wurden 133,5 g der Dichloridsuspension mittels einer Taumelkolbenpumpe zugegeben. Durch Kühlung stieg die Temperatur im Reaktionsgefäß nicht über 0°C an. Nach vollständiger Zugabe der Dichloridsuspension wurden weitere 15 g EE zum Ansatz gegeben. Die Zugabezeit betrug 43 min, die Temperatur im Reaktionsgefäß lag zwischen -10,3 und 0°C.

Die Mischzeit der Edukte in diesem Ansatz mit diesem Mischorgan betrug 3 s.

Mittels HPLC wurde die Ausbeute der Reaktion bestimmt auf NBPT 70,5%, NPPT 25,9%, zusammen 96,4% Wertstoff.

### Beispiel 3 - Vergleichsbeispiel

| Einsatzstoffe: | | | |
|---|---|---|---|
| Vorlage: | | | |
| 56,25 g | Essigsäureethylester | | |
| 25,41 g | PSCl₃ | 0,15 | Mol |

| Reaktion: | | | |
|---|---|---|---|
| 18,75 g | Essigsäureethylester | | |
| 23,64 g | Tripropylamin (TPA) | 0,165 | Mol |
| 7,77 g | n-Butylamin | 0,106 | Mol |
| 2,7 g | n-Propylamin | 0,046 | Mol |
| 25,5 g | NH₃ | 1,5 | Mol |
| 20 g | Essigsäureethylester | | |

### Dichlorid Synthese:

56,25 g Essigsäureethylester wurden mit 25,41 g Thiophosphorylchlorid vorgegelegt. Die Dichloridsuspension wurde unter Zugabe von 23,64 g Tripropylamin, 7,77 g n-Butylamin und 2,7 g n-Propylamin hergestellt.

### Thiophosphorsäuretriamidsynthese:

Eine Druckapparatur wurde auf -20°C gekühlt. 25,5 g Ammoniak wurde über eine Waage in diese Druckapparatur vorgelegt, der Druck betrug 4 bar. Eine angeschlossene Pumpe wurde mit 5 g EE angefahren. Unter Rühren (Mischorgan: Schrägblattrührer, n=100 min-1) wurden 133,6 g der Dichloridsuspension mit Taumelkolbenpumpe zugegeben. Durch Kühlung stieg die Temperatur im Reaktionsgefäß nicht über 0°C an. Nach vollständiger Zugabe der Dichloridsuspension wurden weitere 15 g EE zum Ansatz gegeben.

Die Mischzeit der Edukte in diesem Ansatz mit diesem Mischorgan betrug 35 s.

Mittels HPLC wurde die Ausbeute der Reaktion bestimmt auf NBPT 60,6%, NPPT 24,5%, zusammen 85,1% Wertstoff.

### Beispiel 4

275,14 kg/h einer Mischung (0°C) aus Dichlorid (63,0 kg/h), Tripropylamin (4,4 kg/h), Tripropylaminhydrochlorid (55 kg/h) und Ethylacetat (152,43 kg/h) werden mit 107,3 kg/h flüssigem Ammoniak (0°C) in einer Mischdüse mit einer Mischzeit von <0,1s miteinander vermischt. Die Mischung erfolgt mit starker Scherung und unter einem hohen Druckabfall.

Das Mischungsprodukt wird einem drucktragenden Rohrreaktor zugeführt. Die Produktmischung wird destillativ und thermisch schonend bei niedrigen Drücken aufgearbeitet. Es entstehen 49,07 kg/h Thiophosphorsäuretriamid (NBPT) am Ausgang der Reaktionsstufe.

## Patentansprüche

1. Verfahren zur Herstellung von Triamiden aus Ammoniak und Amido-Dichloriden, **dadurch gekennzeichnet dass** die Edukte rückvermischungsfrei miteinander gemischt und zur Reaktion gebracht werden.

2. Verfahren nach Anspruch 1, **dadurch gekennzeichnet dass** die Konzentration des Amido-Dichlorids im Mischorgan jederzeit unter 0,2 (mol/mol) % des Reaktionsgemisches bezogen auf das Volumen des Reaktionsgemisches liegt.

3. Verfahren nach einem der Ansprüche 1 bis 2, **dadurch gekennzeichnet dass** die Mischzeit der Edukte unterhalb einer Sekunde liegt.

4. Verfahren nach einem der Ansprüche 1 bis 3, **dadurch gekennzeichnet dass** die Mischung der Edukte mittels Düse, Rotor-Stator-Mischer, Reaktionsmischpumpe oder Strahlmischer mit Düse erfolgt.

5. Verfahren nach Anspruch 4, **dadurch gekennzeichnet, dass** die Mischung in einen Rohrreaktor überführt wird.

6. Verfahren nach Anspruch 5, **dadurch gekennzeichnet dass** der Rohrreaktor ein Wärmetauscher ist.

7. Verfahren nach Anspruch 5 oder 6, **dadurch gekennzeichnet dass** die Edukte vor der Vermischung auf unter 0°C gekühlt werden.

8. Verfahren nach einem der Ansprüche 5 oder 6 **dadurch gekennzeichnet, dass** im Rohrreaktor die Reaktionswärme durch verdampfenden Ammoniak abgeführt wird.

9. Verfahren nach Anspruch 5 oder 6, **dadurch gekennzeichnet, dass** der Reaktionsaustrag des Rohrreaktors in eine Kolonne überführt wird.

10. Verfahren nach Anspruch 8, **dadurch gekennzeichnet dass** das Triamid am Sumpf der Kolonne abgezogen wird.

11. Verfahren nach Anspruch 9, **dadurch gekennzeichnet dass** das Triamid N-Alkylthiophosphorsäuretriamid ist.

12. Verwendung von N-Alkylthiophosphorsäuretriamids, erhalten nach dem Verfahren nach einem der Ansprüche 1 bis 10, als Ureaseinhibitor.

13. Verwendung von N-Alkylthiophosphorsäuretriamids, erhalten nach dem Verfahren nach einem der Ansprüche 1 bis 11, als Zusatz in harnstoffhaltigen Düngemitteln.
